# EUROPÄISCHE PATENTANMELDUNG

(11) **EP 0 535 665 A2**
(43) Veröffentlichungstag der Anmeldung: **07.04.1993**
(21) Anmeldenummer: 92116790.4
(22) Anmeldetag: 01.10.1992
(51) Int. Cl.: A01K 11/00, A01K 13/00

(54) **Ohrmarke für Tiere**

(30) Priorität: 02.10.1991 DE 4132793
(71) Anmelder: Nehls, Reinhard, D-46399 Bocholt (DE)
(72) Erfinder: Caisley, Roy, W-4294 Isselburg-Vehlingen (DE)
(74) Vertreter: Peerbooms, Rudolf, Dipl.-Phys.

(57) **Zusammenfassung**

Gezeigt und beschrieben ist eine Tier-Ohrmarke (1), bei der zwei zur Einfassung einer Ohrmuschel (2) dienende Flachteile (3, 4) mittels eines durch die Ohrmuschel (2) zu stechenden Ohrstiftes (5) unlösbar miteinander verbunden sind. Der Ohrstift (5) weist eine zum rückwärtigen Ende (8) hin offene Axialbohrung (6) auf. Um ein nachträgliches Anbringen oder Auswechseln einer Fliegenmarke (10) ohne weiteres Durchbohren der Ohrmuschel (2) zu ermöglichen, ist der Ohrmarke (1) eine Fliegenmarke (10) mit Verankerungsstift (9) zugeordnet, der in der Axialbohrung (6) durch Klemmsitz, Schnapp- oder Rastverbindung oder bevorzugt durch eine Schraubverbindung befestigbar ist.

## Beschreibung

Die Erfindung betrifft eine Ohrmarke für Tiere, mit zwei zur Einfassung einer Ohrmuschel dienenden Flachteilen, welche mittels eines durch die Ohrmuschel zu stechenden Ohrstiftes unlösbar miteinander verbindbar sind, wobei der Ohrstift eine zum rückwärtigen Ende hin offene Axialbohrung aufweist.

Zur individuellen Kennzeichnung von Tieren, insbesondere Großvieh, haben sich Ohrmarken seit langem bewährt, die in unterschiedlichsten Ausführungsformen benutzt werden. Die gattungsgemäße Ausführungsform ist aus der GB 2 062 552 A bekannt, bei der die Axialbohrung des Ohrstiftes zum Ansetzen einer Ohrmarkenzange dient.

Ferner sind nach Art einer Ohrmarke an der Ohrmuschel anzuheftende Fliegenmarken bekannt, die mit einem Insekten, insbesondere Fliegen, abwehrenden Duftstoff versehen sind. Solche Fliegenmarken verlieren nach etwa drei Monaten an Wirkung und müssen ausgetauscht werden, was jedesmal ein erneutes Durchstechen des Tierohres erforderlich macht.

Weiterhin ist bei gattungsgemäßen Ohrmarken bekannt, eines der Flachteile als Fliegenmarke auszubilden. Da beide Flachteile durch den Ohrstift unlösbar miteinander verbunden sind, ist auch hier ein tierschonendes Auswechseln der Fliegenmarke nicht möglich, da dazu der Ohrstift durchtrennt und eine neue Ohrmarke an der Ohrmuschel festgeheftet werden müßte.

Aufgabe der Erfindung ist es, Ohrmarken dahingehend weiterzubilden, daß ein nachträgliches Anbringen, und erforderlichenfalls auch ein Auswechseln, von Fliegenmarken unter Schonung des Tieres rasch und einfach durchgeführt werden kann.

Gelöst wird die Aufgabe durch eine der Ohrmarke zugeordnete, einen Verankerungsstift aufweisende Fliegenmarke, deren Verankerungsstift den Abmessungen der Axialbohrung angepaßt und in der Axialbohrung befestigbar ist. Bei der Erfindung wird die ohnehin vorhandene Axialbohrung des Ohrstiftes zur Befestigung einer entsprechend angepaßten Fliegenmarke genutzt, die jederzeit nachträglich, z.B. erst zu Beginn der fliegenträchtigen Sommerzeit angebracht werden kann.

In Ausgestaltung der Erfindung kann der Verankerungsstift durch Verkleben oder Klemmsitz in der Axialbohrung befestigt werden, was ausreicht, wenn ein Tier nur über einen Sommer aufgezogen wird und also ein Ersetzen einer verbrauchten Fliegenmarke nicht erforderlich ist.

Gemäß einer bevorzugten Weiterbildung der Erfindung kann vorgesehen werden, daß die Axialbohrung und der Verankerungsstift jeweils mit den korrespondierenden Teilen einer Schnapp- oder Rastverbindung versehen sind. Hierdurch ist auch ein Auswechseln der Fliegenmarke jederzeit möglich, was im allgemeinen bei mehrjähriger Aufzucht oder z.B. bei Milchkühen erforderlich ist. Besondere Ausgestaltungen geeigneter Schnapp- und Rastverbindungen sind in den Unteransprüchen angegeben.

Gemäß einer alternativen Ausführungsform kann der Erfindung zufolge vorgesehen werden, daß der Verankerungsstift aus einer Kopfschraube besteht, die entweder unter Materialverdrängung in die Axialbohrung einschraubbar ist oder für die ein Gewinde in der Axialbohrung ausgeformt ist. Eine solche Fliegenmarke ist sehr leicht auswechselbar.

Bei Ohrmarken nach der Erfindung hat es sich ferner als vorteilhaft erwiesen, daß die Flachteile neben ihren Durchstecköffnungen für den Ohrstift durch mehrere Löcher perforiert sind. Durch die dadurch erzielte bessere Luftzirkulation verheilt der Ohrdurchstich wesentlich besser. Diese Luftzirkulation kann noch dadurch verbessert werden, daß die Flachteile an ihrer der Ohrmuschel zugewandten Seite mit einem erhabenen Versteifungsrand versehen sind.

Die Erfindung wird im folgenden anhand mehrerer in der Zeichnung dargestellter Ausführungsformen näher erläutert. In der Zeichnung zeigen:
- Fig. 1: eine Ohrmarke, bei der der Verankerungsstift der Fliegenmarke durch Verkleben oder durch Klemmsitz in der Axialbohrung befestigbar ist,
- Fig. 2: eine zweite Ausführungsform einer Ohrmarke, bei der die Axialbohrung und der Verankerungsstift jeweils mit korrespondierenden Teilen einer Schnapp- oder Rastverbindung versehen sind,
- Fig. 3: eine Abwandlung zur Ausführungsform nach Fig. 2,
- Fig. 4 und Fig. 5: eine dritte Ausführungsform,
- Fig. 6: eine vierte Ausführungsform und
- Fig. 7 und 8: zwei Ohrmarken-Flachteile, in Aufsicht auf ihre der Ohrmuschel zugewandten Seite.

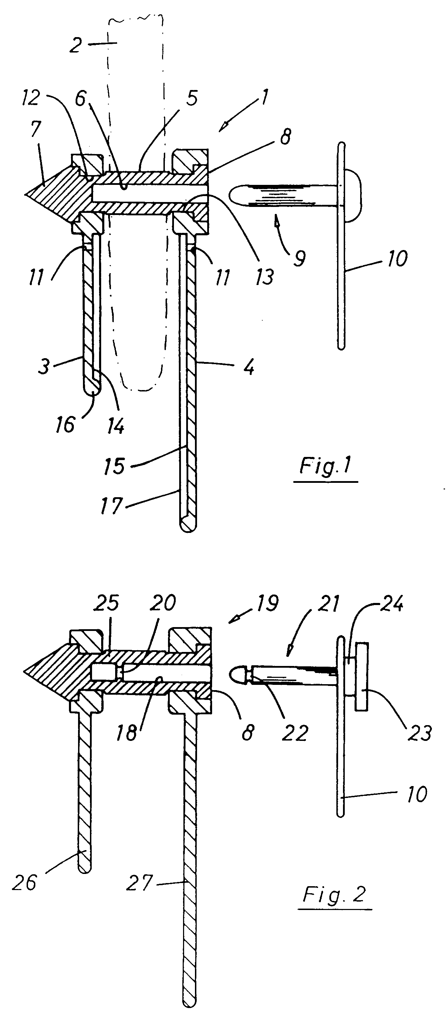

Fig. 1 zeigt eine Ohrmarke 1, bei der zwei zur Einfassung einer Ohrmuschel 2 dienende Flachteile 3, 4 mittels eines die Ohrmuschel 2 durchsetzenden Ohrstiftes 5 unlösbar miteinander verbunden sind. Der Ohrstift 5 weist eine Axialbohrung 6 auf, die an dem seiner Spitze 7 gegenüberliegenden, rückwärtigen Ende 8 mündet und in die ein Verankerungsstift 9 einer Fliegenmarke 10 eindrückbar ist. Um einen sicheren Klemmsitz des Verankerungsstiftes 9 in der Axialbohrung 6 zu gewährleisten, kann der Verankerungsstift 9 leicht konisch ausgeführt oder mit Riefen versehen werden. Ist eine unlösbare Befestigung, z. B. bei einer nur wenige Monate dauernden Kälbermast, ausreichend, kann der Verankerungsstift 9 auch in der Axialbohrung 6 verklebt werden.

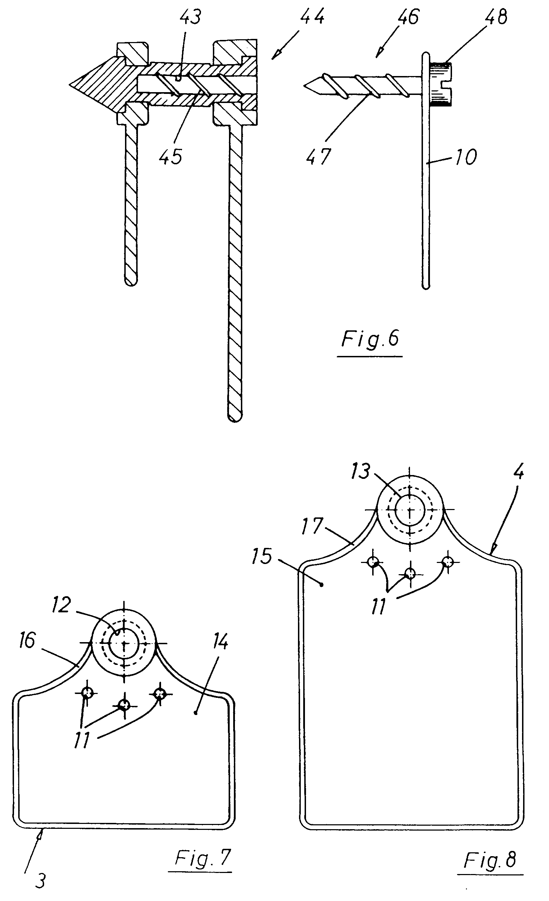

Bei dem Ausführungsbeispiel nach Fig. 1 ist ferner vorgesehen, daß für eine gute Belüftung der Räume zwischen den Flachteilen 3 bzw. 4 und der Ohrmuschel 2 die Flachteile 3, 4 gemäß den Fig. 7 und 8 mit mehreren Löchern 11 nahe neben den Durchstecköffnungen 12, 13 für den Ohrstift 5 versehen sind. Ferner weisen die Flachteile 3, 4 an ihrer der Ohrmuschel 2 zugewandten Seite 14, 15 jeweils einen erhabenen Versteifungsrand 16, 17 auf.

Bei der Ausführungsform nach der Fig. 2 weisen die Axialbohrung 18 der Ohrmarke 19 einen angeformten, umlaufenden Innenwulst 20 und der Verankerungsstift 21 eine zugeordnete Umfangsnut 22 auf, so daß eine sichere Befestigung des Verankerungsstiftes 21 in der Axialbohrung 18 durch ein Einrasten des Innenwulstes 20 in die Umfangsnut 22 gewährleistet wird. Der Verankerungsstift 21 durchsetzt die Fliegenmarke 10 und trägt an seinem rückwärtigen Ende einen verbreiterten Kopf 23. Eine im Durchmesser reduzierte Zwischenstufe 24 zwischen Fliegenmarke 10 und Kopf 23 ermöglicht das Ansetzen eines zangenartigen Abziehwerkzeuges. Da sich das Abziehwerkzeug auf dem rückwärtigen Ende 8 des Ohrstiftes 25 beim Lösen der Rastverbindung abstützt, kann die Fliegenmarke 10 tierschonend entfernt bzw. ausgewechselt werden. Bei dem Ausführungsbeispiel nach Fig. 2 weisen die Flachteile 26, 27 übliche glatte Form auf.

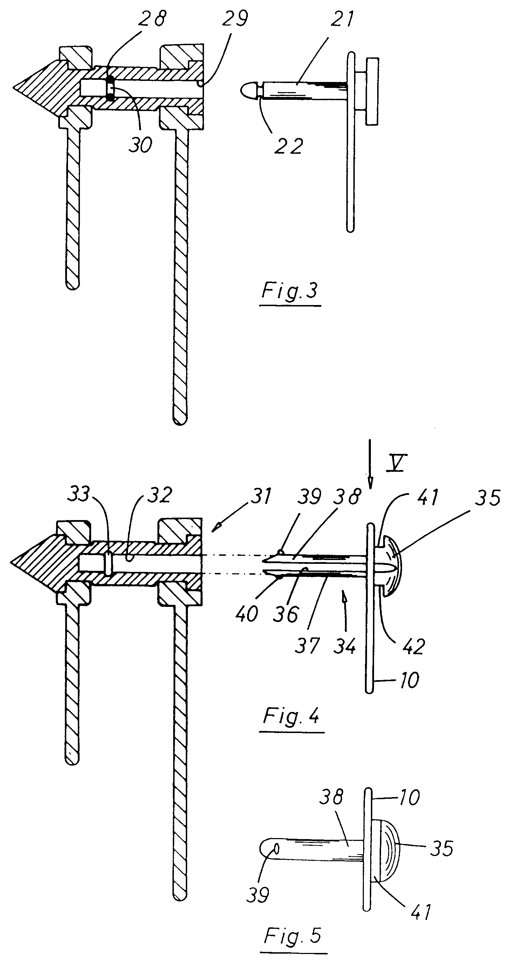

Eine alternative Ausführungsform der Rastverbindung kann gemäß Fig. 3 dadurch verwirklicht werden, daß in einer umlaufenden Ringnut 28 der Axialbohrung 29 ein federnder Rastring 30 eingesetzt wird, der in die zugeordnete Umfangsnut 22 des Verankerungsstiftes 21 einrastet.

Die in Fig. 4 gezeigte Ohrmarke 31 weist in ihrer Axialbohrung 32 eine umlaufende Schnappnut 33 auf. Der Verankerungsstift 34 der zugeordneten Fliegenmarke 10 ist durch einen bis in den Kopf 35 hineinreichenden Längsschlitz 36 in zwei federnde Schenkel 37, 38 geteilt. An ihren Außenseiten tragen die Schenkel 37, 38 jeweils einen Schnappnocken 39, 40, die in die umlaufende Schnappnut 33 einschnappen. Wie auch die Draufsicht nach Fig. 5 - Blickrichtung V nach Fig. 4 - auf die Fliegenmarke 10 zeigt, weist der Kopf 35 nur an den dem Längsschlitz 36 abgewandten Seiten je eine Zwischenstufe 41, 42 auf. Da der Längsschlitz 36 über die Zwischenstufen 41, 42 hinaus bis tief in den verdickten Kopf 35 hineinreicht, kann die Schnappverbindung leicht durch Zusammendrücken der federnden Schenkel 37, 38 mittels einer an den Zwischenstufen 41, 42 angreifenden Zange gelöst werden.

Bei dem bevorzugten Ausführungsbeispiel nach Fig. 6 weist die Axialbohrung 43 der Ohrmarke 44 ein Innengewinde 45 auf. Der Verankerungsstift 46 der zugeordneten Fliegenmarke 10 ist mit einem entsprechenden Außengewinde 47 versehen. Bei dem Verankerungsstift 46 kann es sich dabei um den Schaft einer Kopfschraube 48 handeln, wodurch zum einen eine sichere Befestigung der Fliegenmarke 10 erreicht wird und zum anderen deren leichte Auswechselbarkeit sichergestellt ist.

| Bezugszeichenliste | | | |
|---|---|---|---|
| 1 | Ohrmarke | 31 | Ohrmarke |
| 2 | Ohrmuschel | 32 | Axialbohrung |
| 3 | Flachteil | 33 | Schnappnut |
| 4 | Flachteil | 34 | Verankerungsstift |
| 5 | Ohrstift | 35 | Kopf |
| 6 | Axialbohrung | 36 | Längsschlitz |
| 7 | Spitze | 37 | Schenkel |
| 8 | rückwärtiges Ende | 38 | Schenkel |
| 9 | Verankerungsstift | 39 | Schnappnocken |
| 10 | Fliegenmarke | 40 | Schnappnocken |
| 11 | Löcher | 41 | Zwischenstufe |
| 12 | Durchstecköffnung | 42 | Zwischenstufe |
| 13 | Durchstecköffnung | 43 | Axiaibohrung |
| 14 | Seite | 44 | Ohrmarke |
| 15 | Seite | 45 | Innengewinde |
| 16 | Versteifungsrand | 46 | Verankerungsstift |
| 17 | Versteifungsrand | 47 | Außengewinde |
| 18 | Axialbohrung | 48 | Kopfschraube |
| 19 | Ohrmarke | | |
| 20 | Innenwulst | | |
| 21 | Verankerungsstift | | |
| 22 | Umfangsnut | | |
| 23 | Kopf | | |
| 24 | Zwischenstufe | | |
| 25 | Ohrstift | | |
| 26 | Flachteil | | |
| 27 | Flachteil | | |
| 28 | Ringnut | | |
| 29 | Axialbohrung | | |
| 30 | Rastring | | |

## Patentansprüche

1. Ohrmarke (1) für Tiere, mit zwei zur Einfassung einer Ohrmuschel (2) dienenden Flachteilen (3, 4), die mittels eines durch die Ohrmuschel (2) zu stechenden Ohrstiftes (5) unlösbar miteinander verbindbar sind, wobei der Ohrstift (5) eine zum rückwärtigen Ende (8) hin offene Axialbohrung (6) aufweist, gekennzeichnet durch eine der Ohrmarke (1) zugeordnete, einen Verankerungsstift (9) aufweisende Fliegenmarke (10), deren Verankerungsstift (9) den Abmessungen der Axialbohrung (6) angepaßt und in der Axialbohrung (6) befestigbar ist.

2. Ohrmarke nach Anspruch 1, dadurch gekennzeichnet, daß der Verankerungsstift (9) durch Verkleben oder durch Klemmsitz in der Axialbohrung (6) befestigbar ist.

3. Ohrmarke nach Anspruch 1, dadurch gekennzeichnet, daß die Axialbohrung (18; 29; 32) und der Verankerungsstift (21; 21; 34) jeweils mit den korrespondierenden Teilen (20, 22; 30, 22; 33, 39, 40) einer Schnapp- oder Rastverbindung versehen sind.

4. Ohrmarke nach Anspruch 3, dadurch gekennzeichnet, daß die Axialbohrung (18; 29) mit einem angeformten, umlaufenden Innenwulst (20) oder mit einer, einen eingesetzten Rastring (30) haltenden Ringnut (28) und der Verankerungsstift (21; 21) mit einer zugeordneten Umfangsnut (22; 22) versehen ist.

5. Ohrmarke nach den Ansprüchen 3 oder 4, dadurch gekennzeichnet, daß der Verankerungsstift (21) die Fliegenmarke (10) durchsetzt und an seinem rückwärtigen Ende einen verbreiterten Kopf (23) und zwischen Kopf (23) und Fliegenmarke (10) eine Zwischenstufe (24) zum Ansetzen eines zangenartigen Abziehwerkzeuges aufweist.

6. Ohrmarke nach den Ansprüchen 3 und 5, dadurch gekennzeichnet, daß der Verankerungsstift (34) durch einen bis in den Kopf (35) hineinreichenden Längsschlitz (36) in zwei federnde Schenkel (37, 38) geteilt ist, die jeweils an ihrer Außenseite einen Schnappnocken (39, 40) aufweisen, denen in der Axialbohrung (32) eine umlaufende Schnappnut (33) zugeordnet ist.

7. Ohrmarke nach Anspruch 6, dadurch gekennzeichnet, daß der Kopf (35) nur an den dem Längsschlitz (36) abgewandten Seiten Zwischenstufen (41, 42) aufweist und daß der Längsschlitz (36) über die Zwischenstufen (41, 42) hinaus bis tief in den verdickten Kopf (35) hineinreicht.

8. Ohrmarke nach Anspruch 1, dadurch gekennzeichnet, daß der Verankerungsstift (46) aus einer Kopfschraube (48) besteht, die entweder unter Materialverdrängung in die Axialbohrung einschraubbar ist oder für die ein Gewinde (45) in der Axialbohrung (43) ausgeformt ist.

9. Ohrmarke nach einem oder mehreren der Ansprüche 1 bis 8, dadurch gekennzeichnet, daß die Flachteile (3, 4) nahe neben ihren Durchstecköffnungen (12, 13) für den Ohrstift (5) durch mehrere Löcher (11) perforiert sind.

10. Ohrmarke nach Anspruch 9, dadurch gekennzeichnet, daß die Flachteile (3, 4) an ihrer der Ohrmuschel (2) zugewandten Seite mit einem erhabenen Versteifungsrand (16, 17) versehen sind.
